# EUROPÄISCHE PATENTSCHRIFT

(11) **EP 2 289 372 B1**
(45) Veröffentlichungstag und Bekanntmachung des Hinweises auf die Patenterteilung: **20.03.2013**
(21) Anmeldenummer: 09169107.1
(22) Anmeldetag: 01.09.2009
(51) Int. Cl.: A47C 23/043

(54) **Feder und Matratze**
Spring and mattress
Ressort et matelas

(43) Veröffentlichungstag der Anmeldung: 02.03.2011
(73) Patentinhaber: Ofner, Helmut, 9220 Velden (AT); Erlbeck, Ingrid Elisabeth, 9220 Velden (AT)
(72) Erfinder: Steiner, Gottfried, 8724 Spielberg (AT); Eichler, Herbert, 8724, Spielberg (AT); Erlbeck Ingrid Elisabeth, 9220 Velden (AT); Ofner Helmut, 9220 Velden (AT)
(74) Vertreter: Riebling, Peter

(56) Entgegenhaltungen:
- EP-A1- 1 878 363
- EP-A2- 1 602 303
- EP-A2- 2 116 152
- DE-C- 475 144
- DE-U1-202006 018 923
- DE-U1-202009 003 041
- FR-A- 959 049
- US-A- 67 776
- US-A- 133 102

## Beschreibung

Die Erfindung betrifft eine Feder aus Kunststoff, insbesondere zur Verwendung in einer Schaumstoff- oder Latexmatratze oder in einem Polstermöbel, mit mehreren, unter einem gegenseitigen Abstand aneinander gereihten und miteinander verbundenen Federelementen, wobei jedes Federelement aus einem geformten Kunststoffband besteht.

Derart ausgeführte Kunststofffedern und Matratzen, die mit diesen Federn versehen sind, sind bereits bekannt. Die Federelemente der Federn setzen sich aus zwei radial einander zugeordneten Ringelementen ovaler Kontur zusammen, deren innere Ringhälften einander benachbart sind und im Bereich des Zentrums miteinander verbunden sind. Die Verbindung der Federelemente erfolgt mittels eines im Zentrum der Federelemente verlaufenden Profilstreifens. Es hat sich in der Praxis herausgestellt, dass diese bekannten Federn bei Belastung zu instabil sind und beim Einfedern zum seitlichen Kippen neigen. Bei höherer Belastung sind zudem Brüche der Federelemente möglich.

Aus der DE 20 2009 003 041 U1 ist eine Matratzenfeder aus Kunststoff bekannt, welche aus einem Federkörper mit oberen und unteren Stützflächen und dazwischen angeordneten Federelementen besteht. Die Feder weist die Form eines hohlen Strangprofiles auf, dessen Außenmantel alle Federbauteile bildet. Die Ausführung als hohles Strangprofil soll eine kostengünstige Herstellung der Matratzenfeder erlauben, wobei die Feder mit einer im Verhältnis zum Materialeinsatz verhältnismäßig großen Auflagefläche und großem, Schaumstoffmaterial ersetzenden Volumen ausgeführt werden kann.

Die DE 475144 C offenbart bereits sämtliche Merkmale des Oberbegriffs des unabhängigen Patentanspruches 1.

Der Erfindung liegt die Aufgabe zugrunde, eine neuartige Feder für Matratzen oder Polstermöbel zur Verfügung zu stellen, die auch bei einer aussermittigen Belastung kippstabil bleibt und eine optimale Anpassung an die Körperform des Benutzers gewährleistet.

Gelöst wird die gestellte Aufgabe erfindungsgemäß durch, die Merkmale des unabhängigen Patentanspruches 1, wobei vorteilhafte Weiterbildungen Gegenstand der abhängigen Patentansprüche sind.

Hierbei ist vorgesehen, dass die Federelemente jeweils aus zumindest drei Federsegmenten bestehen, welche aus dem in sich geschlossen verlaufenden Kunststoffband gebildet sind und jeweils paarweise gegenüberliegende, zum Inneren des Federelementes offene Federschlaufen aufweisen, und dass die Federelemente mittels Verbindungsstegen miteinander verbunden sind, welche die Federschlaufen der mittleren Federsegmente benachbarter Federelemente aussenseitig miteinander verbinden.

Die besondere Gestalt der Federelemente mit drei Federsegmenten aus im Wesentlichen übereinstimmend ausgeführten, offenen Federschlaufen sowie die Verbindung der Federelemente über seitliche und daher aussen liegende Verbindungsstege gewährleistet ein optimales Kompressionsverhalten der Feder bei allen möglichen Belastungen. Auch bei einer aussermittigen äusseren Belastung bleibt die Feder kippstabil und passt sich optimal der Körperform des Benutzers an.

Für ein gleichmässiges Einfederungsverhalten erfindungsgemäßer Federn ist es von Vorteil, wenn die Federelemente im Querschnitt bezüglich einer zentralen Hochachse und einer zentralen Querachse spiegelbildlich ausgeführt sind.

Für eine optimale Verteilung der auf die Feder bzw. deren Federelemente wirkenden Belastungen ist es von Vorteil, wenn, im Querschnitt des Federelementes betrachtet, die Federsegmente übereinstimmend breit ausgeführt sind.

Bei seitlicher Belastung der Feder sollen sich die Federelemente in Richtung der Krafteinwirkung neigen, um eine gute Stützwirkung zu erzielen. In diesem Zusammenhang ist es von Vorteil, dass die äusseren Federsegmente mit dem mittleren Federsegment über je ein Paar von im Querschnitt einwärts und insbesondere halbkreisförmig gebogenen Abschnitten verbunden sind, deren Zentralabstand zwischen 15% und 35% der Querschnittsbreite des Federelementes beträgt.

Die äußeren Federsegmente sind erfindungsgemäß derart gestaltet, dass sie jeweils einen eine Auflagefläche des Federelementes bildenden, leicht auswärts gebogenen Außenabschnitt mit einem Zenit aufweisen, an welchem ein teller- bzw. scheibenförmiges Krafteinleitungselement als lokale Verbreiterung des jeweiligen Außenabschnittes ausgebildet ist. Im Bereich der Krafteinleitungselemente erfolgt die zentrale Krafteinleitung und Kraftverteilung, was vor allem auch bei einer seitlichen Belastung der Federelemente funktionelle Vorteile bietet.

Die offenen Federschlaufen sind außenseitig von einwärts und insbesondere halbkreisförmig gebogenen Abschnitten begrenzt, wobei die an diese Abschnitte jeweils unmittelbar anschließenden Segmentabschnitte jeweils einen Öffnungswinkel miteinander einschließen, welcher zwischen 25° und 35° beträgt. Diese Ausführung ist für eine besonders gleichmäßige Verteilung der auf die Feder von außen wirkenden Belastungen von Vorteil.

Die Erfindung ermöglicht es vorteilhafterweise, mehrere Federn in Längsrichtung miteinander zu verbinden, indem die beiden äußeren Federelemente einer Feder in Verlängerung der Verbindungsstege verlaufende Anschlusselemente aufweisen, die eine Steck - und/oder Schweißverbindung von mehreren aneinander gereihten Federn gestatten.

Bei einer bevorzugten Ausführungsvariante der Erfindung sind die an dem einen äußeren Federelement angeordneten Anschlusselemente mit Raststiften und die an dem anderen äußeren Federelement angeordneten Anschlusselemente mit Öffnungen zur Aufnahme der Stifte versehen.

Von besonderem Vorteil bei einer erfindungsgemäß ausgeführten Feder ist, dass zwischen einander benachbarten Federelementen gesonderte Stütz-Federelemente eingesetzt werden können. Die Stütz-Federelemente ermöglichen eine Anpassung der Nachgiebigkeit der Federn an den Randbereichen der Matratze.

Die Stütz-Federelemente sollen möglichst ein den Federelementen angepasstes Einfederungsverhalten aufweisen. Sie werden daher bevorzugt derart ausgeführt, dass sie eine weitgehend übereinstimmend zu den Federelementen ausgeführte Gestalt aus einem geformten Kunststoffband besitzen.

Die Ausführung der Stütz-Federelemente kann auf einfache Weise derart erfolgen, dass ein Anklipsen der Stütz-Federelemente an den Verbindungsstegen zwischen benachbarten Federelementen ermöglicht ist. Dazu können beispielsweise die Stütz-Federelemente mittlere Federsegmente aufweisen, deren Federschlaufen kürzer ausgeführt sind als die Federschlaufen der äußeren Federsegmente und welche außenseitig jeweils ein Schnappelement zum lösbaren Verbinden mit den Verbindungsstegen aufweisen.

Bei einer erfindungsgemäß ausgeführten Feder lässt sich sowohl die Federhärte der Federelemente als auch die Federhärte der Stütz-Federelemente variieren. Dies lässt sich beispielsweise dadurch erreichen, dass die Federelemente und/oder die Stütz-Federelemente der Feder unterschiedliche Materialstärken und/oder Materialbreiten aufweisen.

Auch das verwendete Kunststoffmaterial nimmt Einfluss auf das Einfederungsverhalten der Federelemente und der Stütz-Federelemente. Als Material eignen sich Kunststoffe wie Polyoxymethylen, Polyamid, Polybutylentherphthalat und Polypropylen, bei einer brandhemmenden Ausrüstung eignen sich beispielsweise Polyetherimid, Polyethersulfon oder Polyetheretherketon. Die Federhärte lässt sich ferner dadurch beeinflussen, dass das Material der Federelemente und/oder der Stütz-Federelemente mit Füllstoffen, wie Glasfasern, Kohlefasern, diverse Mineralien und dergleichen, verstärkt ist.

Die Erfindung betrifft ferner eine Matratze aus Schaumstoff und/oder Latex, welche Federn enthält, die erfindungsgemäß ausgeführt sind.

Weitere Merkmale, Vorteile und Einzelheiten der Erfindung werden anhand der Zeichnung, die ein Ausführungsbeispiel einer erfindungsgemäßen ausgeführten Feder darstellt, näher beschrieben. Dabei zeigen
Fig. 1 eine Schrägansicht einer erfindungsgemäß ausgeführten Feder,
Fig. 2 eine Vorderansicht eines Federelementes,

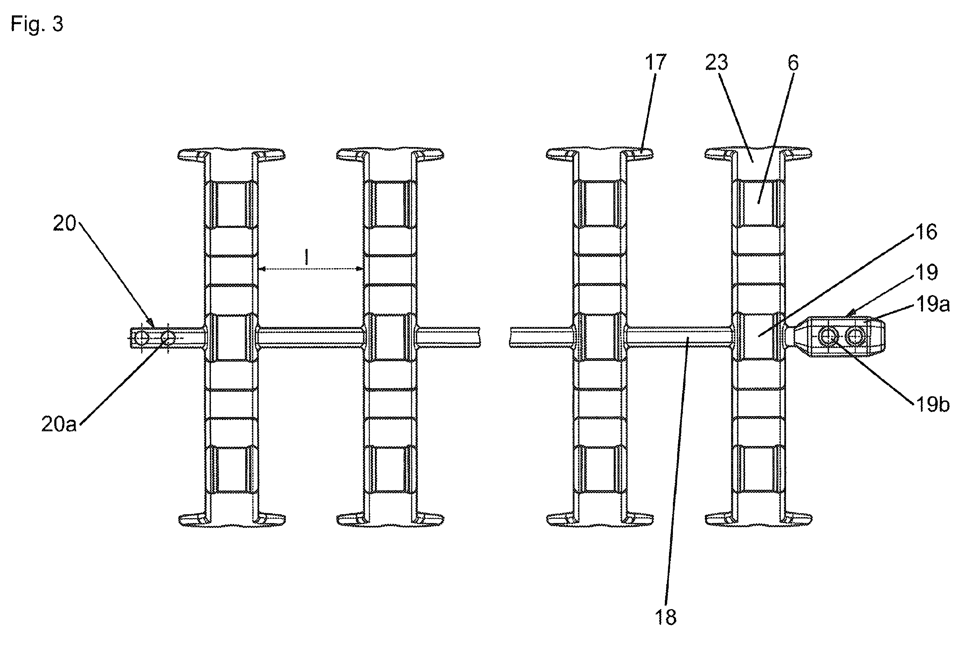

Fig. 3 eine Seitenansicht der Feder,
Fig. 4 eine Draufsicht auf die Feder,
Fig. 5 eine Vorderansicht eines Federelementes, wobei der unbelastete und der belastete Zustand dargestellt sind,
Fig. 6 mehrere Federn unter Belastung,
Fig. 7 eine Feder in Seitenansicht unter Belastung,
Fig. 8 eine Schrägansicht eines Stütz-Federelementes,
Fig. 9 eine Vorderansicht eines Stütz-Federelementes,
Fig. 10 eine Ansicht der Feder mit positionierten Stütz-Federelementen und
Fig. 10a, Fig. 10b und Fig. 10c Schnittdarstellungen gemäß X-X, X'-X' und X"-X" der Fig. 10.

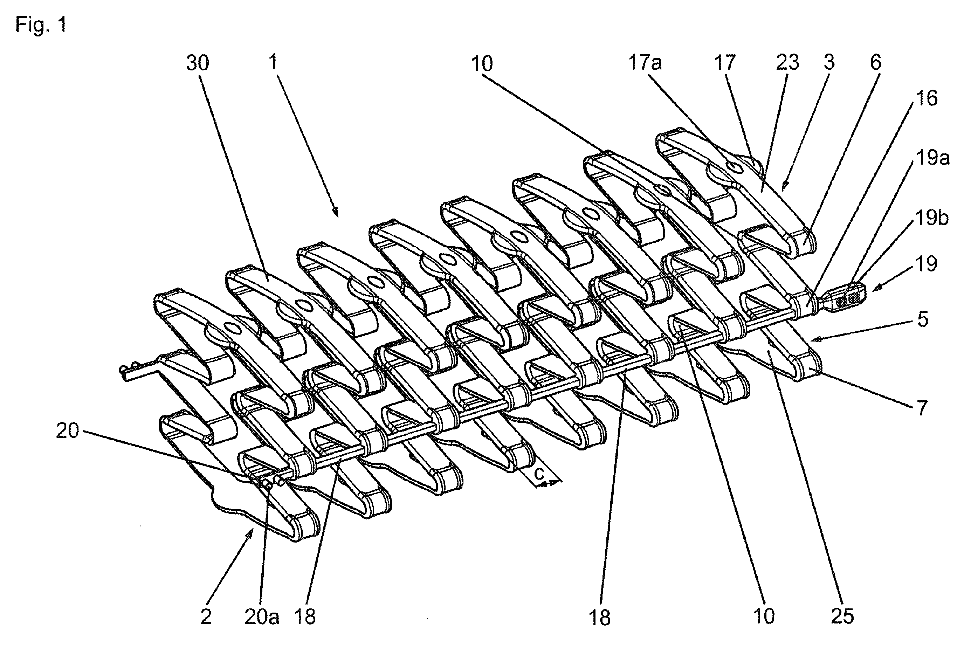

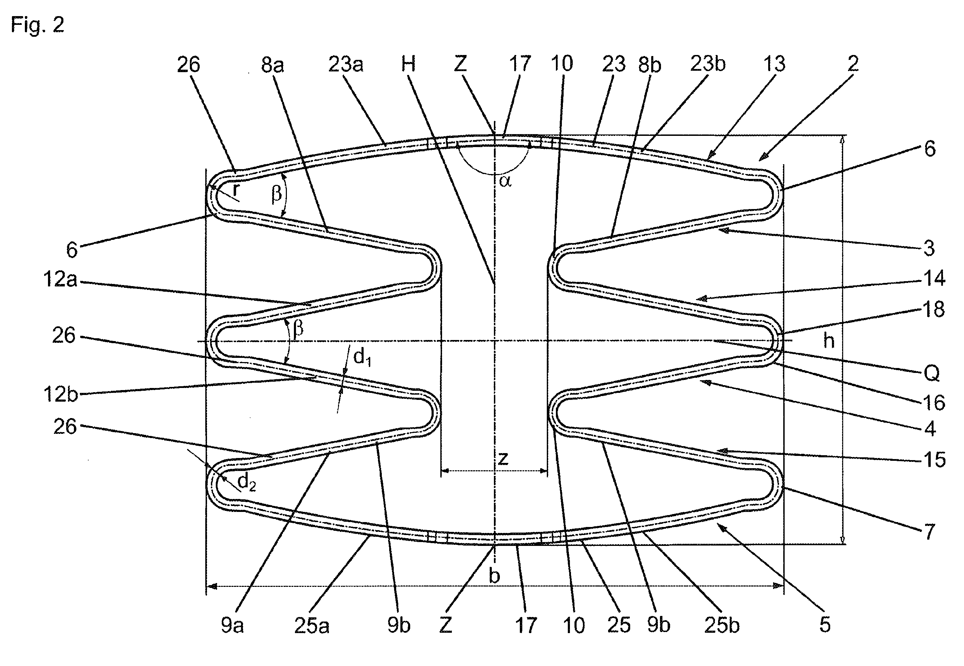

Wie insbesondere Fig. 1 in Verbindung mit Fig. 2 zeigt, setzt sich die Feder 1 aus einer Anzahl von übereinstimmend ausgeführten Federelementen 2 zusammen, welche beispielsweise eine Querschnittsbreite b von etwa 100 mm und eine zentrale Querschnittshöhe h - im unbelasteten Zustand betrachtet - von etwa 70 mm aufweisen. Jedes Federelement 2 weist die Form eines in sich geschlossenen, aus drei Federsegmenten 3, 4 und 5 zusammengesetzten Kunststoffbandes 30 auf, welches eine konstante Breite c von beispielsweise 10 mm besitzt. Das Federelement 2 und somit auch seine Federsegmente 3, 4 und 5 sind bezüglich einer zentralen Hochachse H und einer zentralen Querachse Q symmetrisch gestaltet. Sämtliche Federsegmente 3, 4, 5 weisen die erwähnte Breite b auf und bilden symmetrisch zur Hochachse H Paare von offenen Federschlaufen 13, 14, 15 mit zumindest im Wesentlichen übereinstimmender Schlaufenform und übereinstimmenden Abmessungen.

Jene Kanten des Kunststoffbandes 30, welche mit dem Material der Matratze oder der Polsterung in Kontakt kommen, sind vorzugsweise abgerundet.

Die beiden äußeren Federsegmente 3 und 5 weisen je einen Außenabschnitt 23, 25 auf, wobei die Abschnitte 23, 25 die Abstützflächen der Feder 1 bilden. Die Außenabschnitte 23, 25 sind insgesamt leicht nach außen gewölbt und setzen sich jeweils aus zwei, ebenfalls jeder für sich nach außen gewölbten Teilabschnitten 23a, 23b sowie 25a und 25b zusammen, die im Zenit Z am Schnittpunkt mit der Hochachse H zusammentreffen. Im Zenit Z schließen die beiden Teilabschnitte 23a, 23b und 25a, 25b miteinander jeweils einen Innenwinkel α von 165° bis 178' ein. Die Außenabschnitte 23, 25 gehen über etwa halbkreisförmig und einwärts gebogene Abschnitte 6, 7, deren Außenradius r beispielsweise zwischen 3 bis 5 mm beträgt, in Segmentabschnitte 8a, 8b bzw. 9a, 9b über, welche spitzwinkelig - unter einem Öffnungswinkel β, welcher zwischen 25° und 35°, insbesondere etwa 30°, beträgt - zu den jeweiligen Teilabschnitten 23a, 23b bzw. 25a, 25b verlaufen und derart die Federschlaufen 13 und 15 bilden. An die Segmentabschnitte 8a, 8b bzw. 9a, 9b schließt über halbkreisförmig und auswärts gebogene Abschnitte 10, die ebenfalls den Rundungsradius r aufweisen, das mittlere Federsegment 4 an.

Das mittlere Federsegment 4 des Federelementes 2 besteht ebenfalls aus zwei spitzwinkelig unter dem erwähnten Winkel β verlaufenden Paaren von Segmentabschnitten 12a und 12b, die über halbkreisförmig und einwärts gebogene Abschnitte 16 miteinander verbunden sind. Die beiden Paare von auswärts gebogenen Abschnitten 10 weisen gleich große gegenseitige Zentralabstände z auf, welche zwischen 15 % und 35 % , insbesondere zwischen 20 % und 30 %, der Querschnittsbreite b betragen.

Die Übergänge zwischen den gebogenen Abschnitten 6, 7, 10 und 16 und den an sie anschließenden Segmentabschnitten 23a, 23b, 8a, 8b, 25a, 25b, 9a, 9b, 12a, 12b sind weitgehend fließend bzw. erfolgen über kurze Übergangsabschnitte 26. In den Segmentabschnitten 23a, 23b, 8a, 8b, 15a, 15b, 9a, 9b, 12a, 12b beträgt die Materialstärke d₁ beispielsweise etwa 1,8 mm, in den gebogenen Abschnitten 6, 7, 10 und 16 ist die Materialstärke d₂ etwas geringer, beispielsweise etwa 1,5 mm.

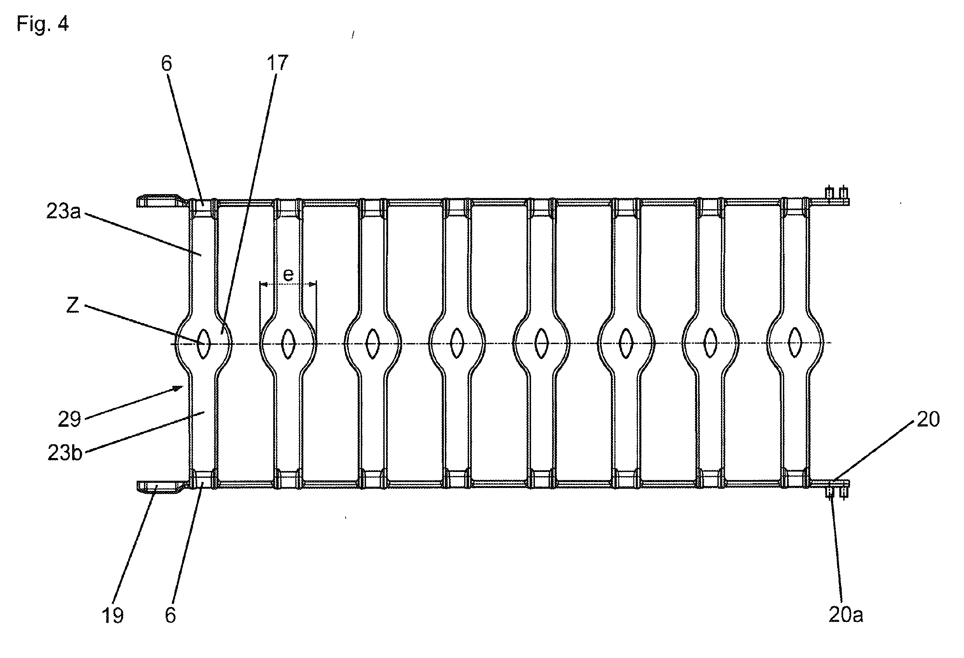

Wie insbesondere Fig. 1 und Fig. 4 zeigen, sind die Außenabschnitte 23 und 25 der beiden Federsegmente 3, 5 im Zenit Z verbreitert, derart, dass hier in Draufsicht im Wesentlichen kreisförmige Krafteinleitungselemente 17 mit einem Durchmesser e von insbesondere 15 mm bis 25 mm gebildet sind, deren Materialstärke der Materialstärke der Außenabschnitte 23 und 25 entspricht. Die Krafteinleitungselemente 17 weisen mittig jeweils eine etwa ovale und in Erstreckungsrichtung der Außenabschnitte 23, 25 orientierte Vertiefung 17a auf.

Die Feder 1 besteht aus einer Anzahl von aneinander gereihten Federelementen 2, vorzugsweise sechs bis zehn Federelementen 2, welche miteinander durch Verbindungsstege 18 verbunden sind, welche jeweils zwischen den einwärts gebogenen Abschnitten 16 der mittleren Federsegmente 4 benachbarter Federelemente 2 verlaufen und an den Abschnitten 16 außenseitig angeformt sind. Sämtliche Verbindungsstege 18 sind vorzugsweise gleich lang ausgeführt und weisen bei der gezeigten Ausführung einen etwa mondsichelförmigen Querschnitt auf. Die Verbindungsstege 18 können auch einen anderen Querschnitt, beispielsweise einen kreisförmigen Querschnitt, aufweisen. Die Länge I der Verbindungsstege 18 bestimmt den gegenseitigen Abstand der einzelnen Federelemente 2 einer Feder 1 und beträgt in der Größenordnung von 15 mm bis 25 mm. Zur Anpassung von Federn 1 an die Matratzenabmessungen können diese im Bereich der Verbindungsstege 18 abgelängt und derart verkürzt werden.

Es ist möglich, eine Anzahl von Federn 1 über Steckverbindungen zusammenzufügen und aneinander zu reihen. Zu diesem Zweck sind an den äußeren Federelementen 2 in Verlängerung der Verbindungsstege 18 Anschlusselemente 19, 20 vorgesehen. Das eine äußere Federelement 2 weist Anschlusselemente 19, das andere Federelement 2 Anschlusselemente 20 auf. Die Anschlusselemente 19 sind mit einem Elementkörper 19a versehen, welcher etwas voluminöser ausgeführt ist als die Verbindungsstege 18 und außenseitig ein Paar von Rastöffnungen 19b aufweist. Die Anschlusselemente 20 besitzen jeweils zwei Raststifte 20a, die mit den Rastöffnungen 19 in Eingriff bringbar sind. An eine Feder 1 kann daher eine zweite Feder 1 angefügt werden, indem die Raststifte 20a an den Anschlusselementen 20 der einen Feder 1 in die Rastöffnungen 19b an den Anschlusselementen 19 der zweiten Feder 1 gesteckt werden. Diese Steckverbindungen können zusätzlich verschweißt werden.

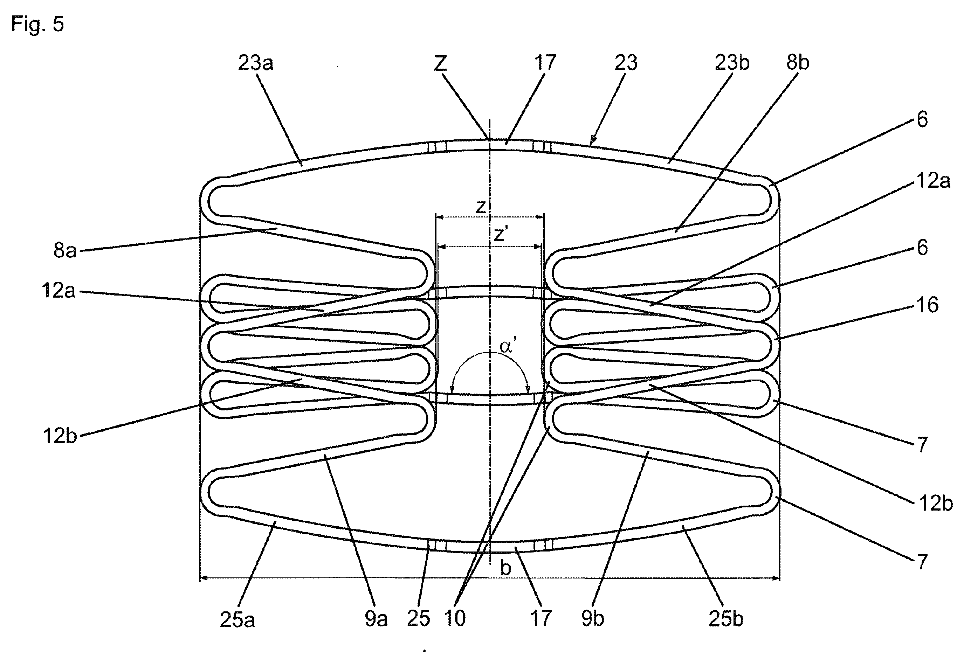

Fig. 5 zeigt die erfindungsgemäße Feder 1 im unbelasteten Zustand und unter der maximal möglichen Kompression. Die Segmentabschnitte 23a, 8a, die Abschnitte 23b, 8b, die Abschnitte 12a, 12b, die Abschnitte 9a, 25a, und die Abschnitte 9b, 25b der ziehharmonikaartig zusammengedrückten Federschlaufen 13, 14, 15 kommen dabei nahe der gebogenen Abschnitte 6, 7, 10, 16 miteinander in Kontakt. Die Krafteinleitungselemente 17 stabilisieren die Außenabschnitte 23 und 25. Der Zentralabstand z' zwischen den gebogenen Abschnitten 10 ist im komprimierten Zustand kleiner als z, sodass das Federelement 2 seine ursprüngliche, auch in der nicht komprimierten Lage gegebene Querschnittsbreite b beibehält. Die in Fig. 5 eingezeichneten, senkrecht zum Federelement 2 verlaufenden strichlierten Linien verdeutlichen das Kompressionsverhalten des Federelementes 2.

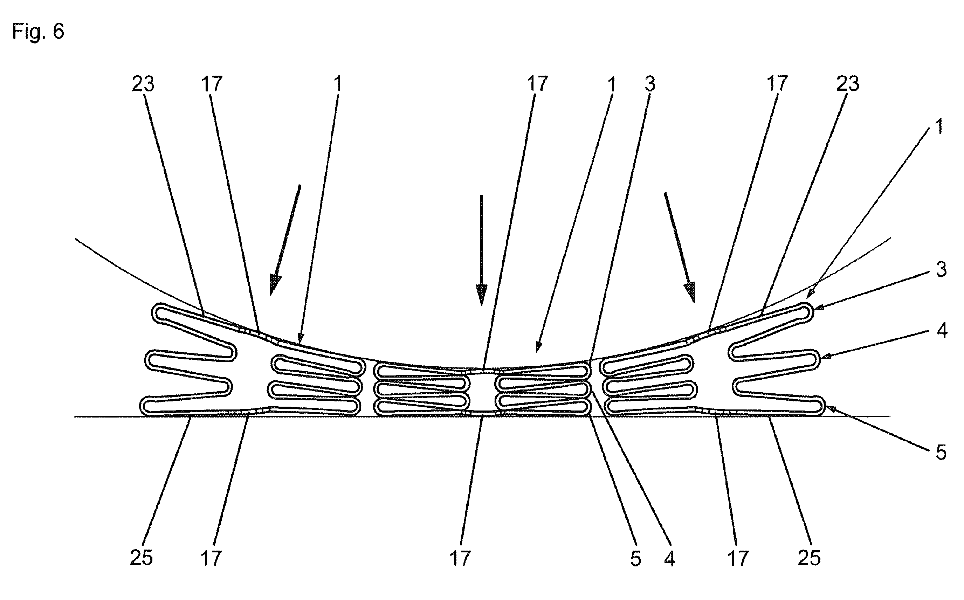

Fig. 6 zeigt schematisch die Vorderansicht von Federelementen 2 von drei nebeneinander angeordneten Federn 1, wie sie beispielsweise in einer Matratze enthalten sein können, unter Belastung, wobei die Pfeile die Belastungsrichtungen kennzeichnen und die Belastung auf die mittlere Feder 1 am größten ist. Die Federn 1 passen sich optimal der Belastung an.

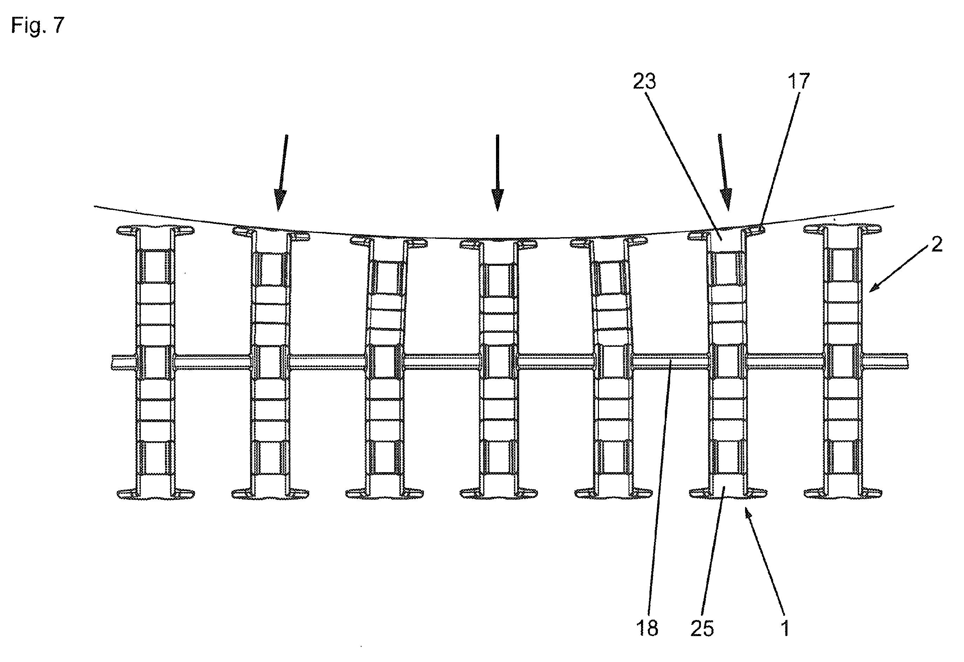

Fig. 7 zeigt eine Seitenansicht einer Feder 1 unter Belastung, wobei hier beispielhaft die Belastung im mittleren Bereich der Feder 1 am größten ist. Die Federelemente 2 neigen sich bzw. kippen infolge der funktionellen Geometrie der Krafteinleitungselemente 17 geringfügig in Richtung der Krafteinwirkung und gewährleisten dadurch eine optimale Abstützung des Körpers des Benützers.

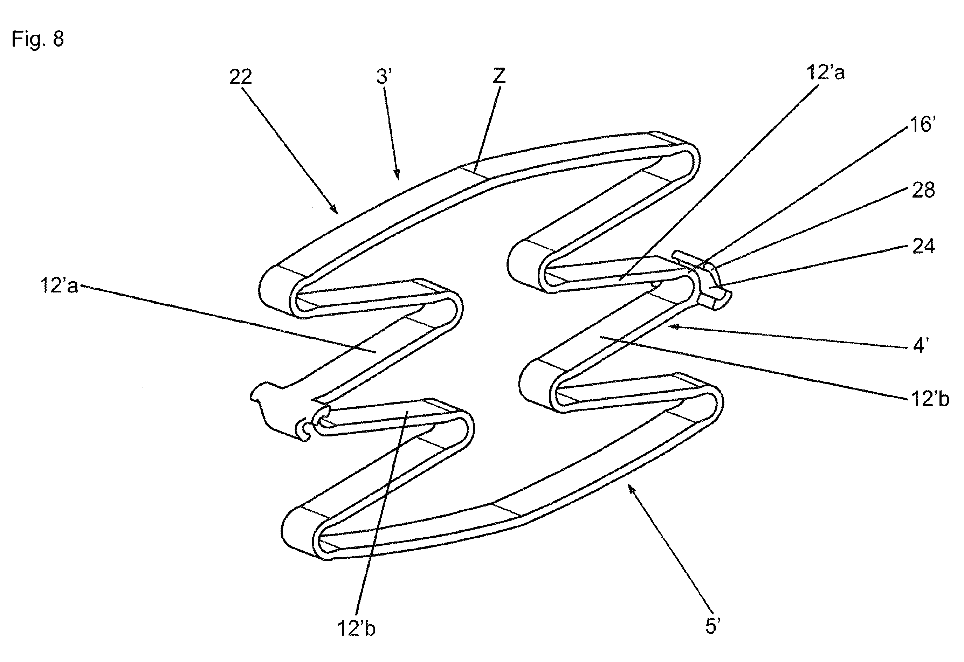

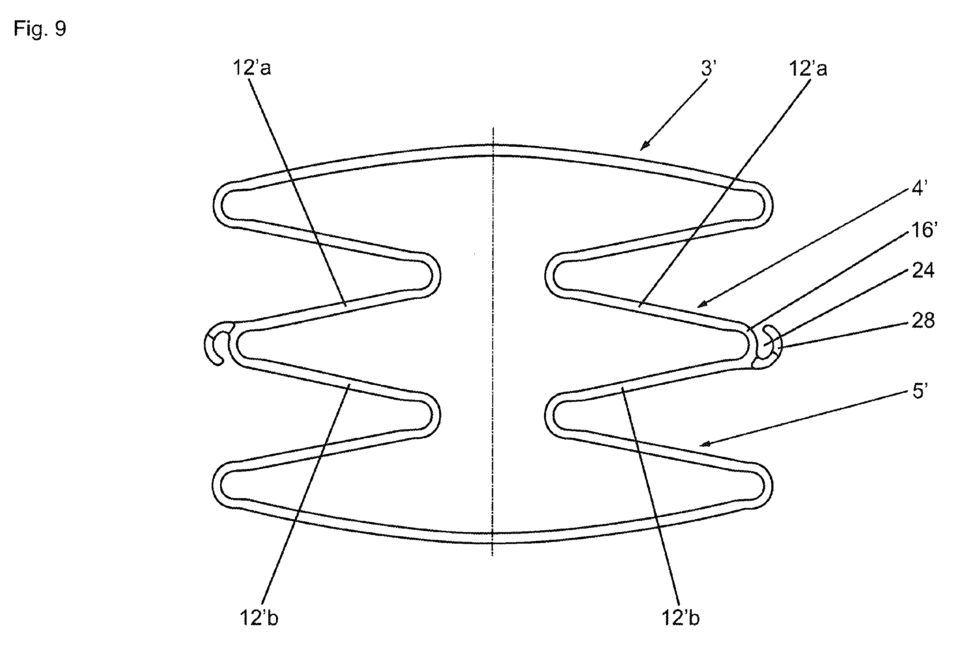

Fig. 8 und Fig. 9 zeigen eine Ausführungsform eines Stütz-Federelementes 22, welches zur Verstärkung von Federn 1, die an den Randbereichen von Matratzen eingesetzt werden, verwendet werden kann. Die Stütz-Federelemente 22 können zwischen benachbarten Federelementen 2 einer Feder 1 eingesetzt werden, wobei die Stütz-Federelemente 22 zwischen sämtlichen Federelementen 2 einer Feder 1 oder nur zwischen jedem zweiten oder jedem dritten Federelement 2 eingesetzt werden können. Die Stütz-Federelemente 22 sind weitgehend übereinstimmend zu den Federelementen 2 ausgeführt und weisen ein mittleres Federsegment 4' und zwei äußere Federsegmente 3' und 5' auf. Im Folgenden werden nur jene Bestandteile der Stütz-Federelemente 22 gesondert beschrieben, die von den Federelementen 2 abweichen. Bei der gezeigten Ausführung sind an den Zenitstellen Z der Federsegmente 3', 5' keine Krafteinleitungselemente vorgesehen. Die Segmentabschnitte 12'a und 12'b im mittleren Federsegment 4' sind etwas kürzer ausgeführt als die Segmentabschnitte 12a, 12b der Federelemente 2. An den Außenseiten der einwärts gebogenen Abschnitte 16' im mittleren Federsegment 4' sind gebogene bzw. hakenförmige Schnappelemente 28 angeformt, wobei das Schnappelement 28 an dem einen Abschnitt 16' entgegengesetzt zum Schnappelement 28 am anderen Abschnitt 16' gebogen ist. Die Schnappelemente 28 bilden Rastmulden 24, welche an die Verbindungsstege 18 des Federelementes 2 angepasst sind. Wie Fig. 8 zeigt, ist die Erstreckung der Schnappelemente 28 an die Länge I der Verbindungsstege 18 angepasst. Die Stütz-Federelemente 22 werden zwischen benachbarten Federelementen 2 eingesetzt, indem die Schnappelemente 28 an den Verbindungsstegen 18 einrasten. Das Einfederungsverhalten der Stütz-Federelemente 22 kann im Wesentlichen analog zu jenem der Federelemente 2 sein.

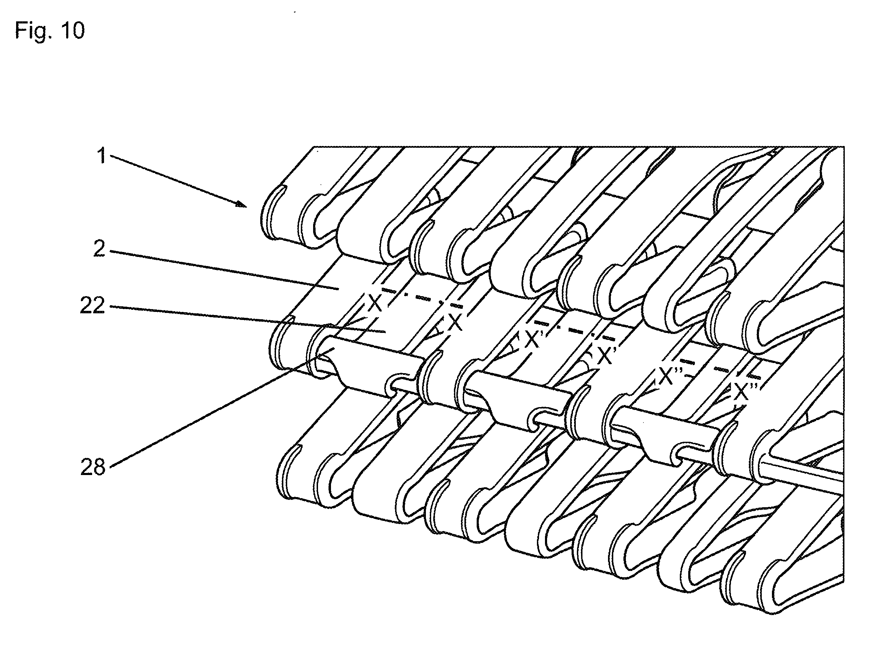

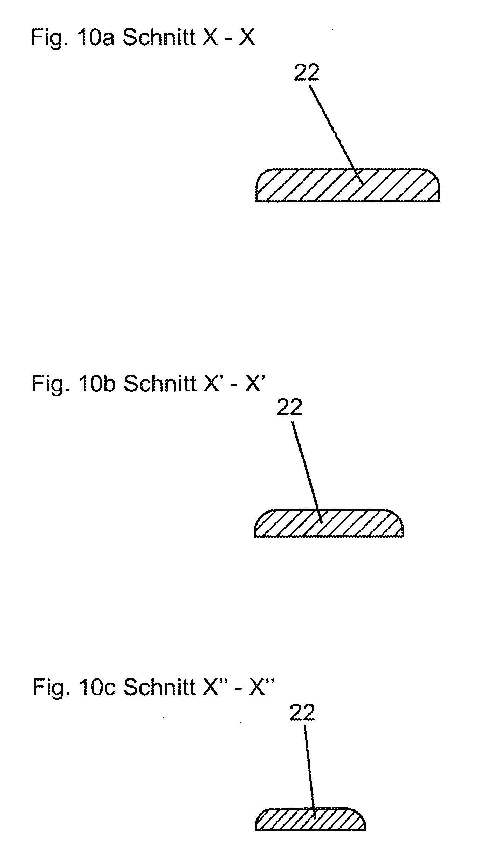

Die Stütz-Federelemente 22 können auch ein zu den Federelementen 2 abweichendes Einfederungsverhalten aufweisen, indem sie aus einem anderen Material hergestellt werden als die Federelemente 2 und/oder eine andere Materialstärke und/oder Materialbreite aufweisen. Fig. 10 zeigt eine Ansicht einer Feder 1 mit Stütz-Federelementen 22, die unterschiedlich große Querschnittsflächen aufweisen, wie es den Schnittdarstellungen den Fig. 10a bis 10c zu entnehmen ist. Die Schnappelemente 28 sind bei allen Stütz-Federelementen 22 an die Länge I der Verbindungsstege 18 angepasst, um einen spielfreien Sitz der Stütz-Federelementen 22 auf den Verbindungsstegen 18 zu gewährleisten.

Die Stütz-Federelemente 22 können ferner einzeln oder als mehrere, zusammenhängende Elemente in die Freiräume zwischen den Federelementen 2 eingesetzt werden. Die Stütz-Federelemente 22 ermöglichen vor allem eine Anpassung der Nachgiebigkeit der Federn 1 an den Randbereichen einer Matratze. Die Durchlüftung der Matratze wird durch die Stütz-Federelemente 22 nicht beeinträchtigt.

Sowohl die Feder 1 als auch die Stütz-Federelemente 22 können im Spritzguss hergestellt werden. Als Ausgangsmaterial eignen sich verschiedene Kunststoffe, insbesondere Polyoxymethylen (POM), Polyamid (PA), Polybutylentherephthalat (PBT) oder Polypropylen (PP). Sollten erhöhte Anforderungen an das Brandverhalten der Federn gestellt werden, eignen sich thermoplastische Hochleistungsthermoplaste wie beispielsweise Polyetherimid (PEI), Polyethersulfon (PES) oder Polyetheretherketon (PEEK). Zur Erhöhung der Federsteifigkeit können diese Kunststoffe mittels Füllstoffen, wie beispielsweise Glasfasern, Kohlefasern, Mineralien oder Ähnlichem, verstärkt werden.

Zur Variation der Federhärte können in einer Feder 1 Federelemente 2 mit unterschiedlichen Wandstärken oder Breiten verwendet werden. Die Federn 1 für eine Matzratze können ebenfalls aus Federelementen 2 unterschiedlicher Federhärte bestehen. Bei gleichem Federquerschnitt kann die Federhärte auch durch die erwähnte Faserverstärkung des Kunststoffes bis 50 Gewichtsprozent angepasst werden. Für spezielle Anwendungsgebiete der Matratzenfedern ist auch eine brandhemmende Einstellung der zur Fertigung der Federelemente eingesetzten Kunststoffe möglich.

Erfindungsgemäß ausgeführte Federn 1 können mehr als drei Federsegmente aufweisen, insbesondere bis zu fünf. Sie eignen sich vor allem als federnde Elemente in einem Matratzenkörper aus Schaumstoff und/oder Latex. Die Federn 1 lassen sich dabei quer und/oder längs zur Längsrichtung einer Matratze in Reihen als aneinander gefügte Federn 1 anordnen. Die Federn 1 werden in Hohlräume der Matratze eingelegt, die entsprechend der einhüllenden Außenkontur der unbelasteten Federn ausgeführt sind. Möglich ist auch ein Umschäumen der Federn.

### BEZUGSZIFFERNLISTE

- 1: Feder
- 2: Federelement
- 3: Federsegment
- 3': Federsegment
- 4: Federsegment
- 4': Federsegment
- 5: Federsegment
- 5': Federsegment
- 6: einwärts gebogene Abschnitt
- 7: einwärts gebogener Abschnitt
- 8a: Segmentabschnitt
- 8b: Segmentabschnitt
- 9a: Segmentabschnitt
- 9b: Segmentabschnitt
- 10: auswärts gebogener Abschnitt
- 12a: Segmentabschnitt
- 12b: Segmentabschnitt
- 12'a: Segmentabschnitt
- 12'b: Segmentabschnitt
- 13: Federschlaufe
- 14: Federschlaufe
- 15: Federschlaufe
- 16: einwärts gebogener Abschnitt
- 16': einwärts gebogener Abschnitt
- 17: Krafteinleitungselement
- 17a: Vertiefung
- 18: Verbindungssteg
- 19: Anschlusselement
- 19a: Elementkörper
- 19b: Rastöffnung
- 20: Anschlusselement
- 20a: Raststift
- 22: Stütz-Federelement
- 23: Außenabschnitt
- 23a: Teilabschnitt
- 23b: Teilabschnitt
- 24: Rastmulde
- 25: Außenabschnitt
- 25a: Teilabschnitt
- 25b: Teilabschnitt
- 26: Übergangsabschnitt
- 28: Schnappelement
- 30: Kunststoffband
- a: Innenwinkel
- b: Querschnittsbreite
- h: Höhe
- H: Hochachse
- Q: Querachse
- Z: Zenit
- c: Breite des Kunststoffbandes
- d1: Stärke
- d2: Stärke
- r: Außenradius
- β: Öffnungswinkel
- z: Zentralabstand
- z': Zentralabstand
- e: Durchmesser
- I.: Länge

## Patentansprüche

1. Feder, insbesondere zur Verwendung in einer Schaumstoff- oder Latexmatratze oder in einem Polstermöbel, mit mehreren, unter einem gegenseitigen Abstand aneinander gereihten und miteinander verbundenen Federelementen (2), wobei jedes Federelement (2) aus einem geformten Band (30) besteht, wobei die Federelemente (2) jeweils aus zumindest drei Federsegmenten (3, 4, 5) bestehen, welche aus dem in sich geschlossen verlaufenden Band (30) gebildet sind und jeweils paarweise gegenüberliegende, zum Inneren des Federelementes (2) offene Federschlaufen (13, 14, 15) aufweisen, und wobei die Federelemente (2) mittels Verbindungsstegen (18) miteinander verbunden sind, welche die Federschlaufen (14) der mittleren Federsegmente (4) benachbarter Federelemente (2) aussenseitig miteinander verbinden, **dadurch gekennzeichnet, dass** die Feder und das Band (30) der Federelemente (2) aus Kunststoff ausgebildet sind und dass die äusseren Federsegmente (3, 5) jeweils einen eine Auflagefläche des Federelementes (2) bildenden auswärts gebogenen Aussenabschnitt (23, 25) mit einem Zenit (Z) aufweisen, an welchem ein teller- bzw. scheibenförmiges Krafteinleitungselement (17) als lokale Verbreiterung des jeweiligen Aussenabschnittes (23, 25) ausgebildet ist.

2. Feder nach Anspruch 1, **dadurch gekennzeichnet, dass** das Federelement (2) im Querschnitt bezüglich einer zentralen Hochachse (H) und einer zentralen Querachse (Q) spiegelbildlich ausgeführt ist.

3. Feder nach Anspruch 1 oder 2, **dadurch gekennzeichnet, dass**, im Querschnitt des Federelementes (2) betrachtet, die Federsegmente (3, 4, 5) gleich breit ausgeführt sind.

4. Feder nach einem der Ansprüche 1 bis 3, **dadurch gekennzeichnet, dass** die äusseren Federsegmente (3, 5) mit dem mittleren Federsegment (4) über je ein Paar von im Querschnitt einwärts und insbesondere etwa halbkreisförmig gebogenen Abschnitten (10) verbunden sind, deren Zentralabstand (z) zwischen 15 % und 35 % der Querschnittsbreite (b) des Federelementes (2) beträgt.

5. Feder nach einem der Ansprüche 1 bis 4, **dadurch gekennzeichnet, dass** die offenen Federschlaufen (13, 14, 15) aussenseitig von einwärts und insbesondere etwa halbkreisförmig gebogenen Abschnitten (6, 7, 16) begrenzt sind, wobei die an diese Abschnitte (6, 7, 16) jeweils unmittelbar anschliessenden Segmentabschnitte (23a, 8a; 23b, 8b; 12a, 12b; 25a, 9a; 25b, 9b) jeweils einen Öffnungswinkel (β) miteinander einschliessen, welcher zwischen 25° und 35° beträgt.

6. Feder nach einem der Ansprüche 1 oder 5, **dadurch gekennzeichnet, dass** die beiden äusseren Federelemente (2) in Verlängerung der Verbindungsstege (18) verlaufende Anschlusselemente (19, 20) aufweisen, die eine Steck- und/oder Schweissverbindung von mehreren aneinander gereihten Federn (1) gestatten.

7. Feder nach Anspruch 6, **dadurch gekennzeichnet, dass** die an dem einem äusseren Federelement (2) angeordneten Anschlusselemente (20) mit Raststiften (20a) und die an dem anderen äusseren Federelement (2) angeordneten Anschlusselemente (19) mit Öffnungen (19b) zur Aufnahme der Stifte (20a) versehen sind.

8. Feder nach einem der Ansprüche 1 bis 7, **dadurch gekennzeichnet, dass** zwischen einander benachbarten Federelementen (2) gesonderte Stütz-Federelemente (22) eingesetzt sind.

9. Feder nach Anspruch 8, **dadurch gekennzeichnet, dass** die Stütz-Federelemente (22) eine weitgehend übereinstimmend zu den Federelementen (2) ausgeführte Gestalt aus einem geformten Kunststoffband aufweisen.

10. Feder nach Anspruch 8 oder 9, **dadurch gekennzeichnet, dass** die Stütz-Federelemente (22) mittlere Federsegmente (4') aufweisen, deren Federschlaufen (15') kürzer ausgeführt sind als die Federschlaufen der äusseren Federsegmente (3', 4') und welche aussenseitig jeweils ein Schnappelement (28) zum lösbaren Verbinden der Stütz-Federelemente (22) mit den Verbindungsstegen (18) aufweisen.

11. Feder nach einem der Ansprüche 8 bis 10, **dadurch gekennzeichnet, dass** die Materialstärke und/oder Materialbreite der Stütz-Federelemente (22) von jener der Federelemente (2) abweichen.

12. Feder nach einem der Ansprüche 1 bis 11, **dadurch gekennzeichnet, dass** ihre Federelemente (2) und/oder ihre Stütz-Federelemente (22) unterschiedliche Materialstärken und/oder Materialbreiten aufweisen.

13. Feder nach einem der Ansprüche 1 bis 12, **dadurch gekennzeichnet, dass** die Federelemente (2) und die Stütz-Federelemente (22) aus Polyoxymethylen, Polyamid, Polybutylentherephthalat, Polypropylen, Polyetherimid, Polyethersulfon oder Polyetheretherketon bestehen.

14. Feder nach einem der Ansprüche 1 bis 13, **dadurch gekennzeichnet, dass** das Material der Federelemente (2) und/oder der Stütz-Federelemente (22) mit Füllstoffen, wie Glasfasern, Kohlefasern, Mineralien und dergleichen, verstärkt ist.

15. Matratze aus Schaumstoff und/oder Latex, welche Federn (1) enthält, die gemäß einem oder mehreren der Ansprüche 1 bis 14 ausgeführt sind.

## Claims

1. Spring, in particular for use in a foam or latex mattress or in upholstered furniture, with a plurality of spring elements (2) connected to one another and arranged in a row next to one another at a mutual spacing, wherein each spring element (2) consists of a formed band (30), the spring elements (2) in each case consisting of at least three spring segments (3, 4, 5), which are formed from the band (30) running in a self-enclosed manner and in each case have spring loops (13, 14, 15), which oppose one another pair-wise and are open toward the interior of the spring element (2), and wherein the spring elements (2) are connected to one another by means of connecting webs (18), which connect the spring loops (14) of the central spring segments (4) of adjacent spring elements (2) to one another on the outside, **characterised in that** the spring and the band (30) of the spring elements (2) are made from plastics material and **in that** the outer spring segments (3, 5) in each case have an outwardly bent outer portion (23, 25), which forms a support face for the spring element (2), with a vertex (Z), on which a plate-shaped or disc-shaped force introduction element (17) is formed as a local widening (1) of the respective outer portion (23, 25).

2. Spring according to claim 1, **characterised in that** the spring element (2) is configured mirror symmetrically in cross section with respect to a central vertical axis (H) and a central transverse axis (Q).

3. Spring according to claim 1 or 2, **characterised in that**, viewed in the cross section of the spring element (2), the spring segments (3, 4, 5) are equally wide.

4. Spring according to any one of claims 1 to 3, **characterised in that** the outer spring segments (3, 5) are connected to the central spring segment (4) by means of a pair, in each case, of portions (10) in cross section bent inwardly and, in particular, approximately in a semi-circular manner, the central spacing (z) of which is between 15% and 35% of the cross sectional width (b) of the spring element (2).

5. Spring according to any one of claims 1 to 4, **characterised in that** the open spring loops (13, 14, 15) are limited on the outside by portions (6, 7, 16) which are bent inwardly and, in particular, approximately in a semi-circular manner, the segment portions (23a, 8a; 23b, 8b; 12a, 12b; 25a, 9a; 25b, 9b) directly adjoining these portions (6, 7, 16) in each case enclosing an opening angle (β) with one another, which is between 25° and 35°.

6. Spring according to any one of claims 1 to 5, **characterised in that** the two outer spring elements (2) have connection elements (19, 20), which run as an extension of the connecting webs (18) and allow a plug and/or welded connection of a plurality of springs (1) arranged in a row next to one another.

7. Spring according to claim 6, **characterised in that** the connection elements (20) arranged on the one outer spring element (2) are provided with latching pins (20a) and the connection elements (19) arranged on the other outer spring element (2) are provided with openings (19b) to receive the pins (20a).

8. Spring according to any one of claims 1 to 7, **characterised in that** separate support spring elements (22) are inserted between mutually adjacent spring elements (2).

9. Spring according to claim 8, **characterised in that** the support spring elements (22) have a configuration substantially coinciding with the spring elements (2) and made of a formed plastics material band.

10. Spring according to claim 8 or 9, **characterised in that** the support spring elements (22) have central spring segments (4'), the spring loops (15') of which are shorter than the spring loops of the outer spring segments (3', 4') and which, in each case, have a snap-on element (28) on the outside to releasably connect the support spring elements (22) to the connecting webs (18).

11. Spring according to any one of claims 8 to 10, **characterised in that** the material thickness and/or the material width of the support spring elements (22) differ from that of the spring elements (2).

12. Spring according to any one of claims 1 to 11, **characterised in that** its spring elements (2) and/or its support spring elements (22) have different material thicknesses and/or material widths.

13. Spring according to any one of claims 1 to 12, **characterised in that** the spring elements (2) and the support spring elements (22) consist of polyoxymethylene, polyamide, polybutylene terephthalate, polypropylene, polyetherimide, polyethersulfone or polyether ether ketone.

14. Spring according to any one of claims 1 to 13, **characterised in that** the material of the spring elements (2) and/or the support spring elements (22) is reinforced with fillers, such as glass fibres, carbon fibres, minerals and the like.

15. Mattress made of foam and/or latex, which contains springs (1), which are configured according to any one or more of claims 1 to 14.

## Revendications

1. Ressort, en particulier à utiliser dans un matelas en mousse ou en latex ou dans un meuble rembourré, avec plusieurs éléments à ressort (2) qui sont alignés en étant espacés les uns des autres et qui sont reliés entre eux, étant précisé que chaque élément à ressort (2) se compose d'une bande profilée (30), que les éléments à ressort (2) se composent chacun d'au moins trois segments à ressort (3, 4, 5) qui sont formés à partir de la bande (30) fermée sur elle-même et présentent chacun des boucles à ressort (13, 14, 15) qui se font face par paires et qui sont ouvertes vers l'intérieur de l'élément à ressort (2), et que les éléments à ressort (2) sont reliés entre eux à l'aide de pattes de liaison (18) qui relient entre elles, côté extérieur, les boucles à ressort (14) des segments à ressort centraux (4) d'éléments à ressort (2) voisins, **caractérisé en ce que** le ressort et la bande (30) des éléments à ressort (2) sont en matière plastique et **en ce que** les segments à ressort extérieurs (3, 5) comportent chacun un tronçon extérieur (23, 25) qui est bombé vers l'extérieur, qui forme une surface d'appui pour l'élément à ressort (2) et qui présente un zénith (Z) au niveau duquel un élément d'introduction de force en forme d'assiette ou de disque (17) est conçu comme un élargissement local de la partie extérieure (23, 25).

2. Ressort selon la revendication 1, **caractérisé en ce que** l'élément à ressort (2), en coupe transversale, est formé en miroir par rapport à un axe vertical central (H) et à un axe transversal central (Q).

3. Ressort selon la revendication 1 ou 2, **caractérisé en ce que**, si on considère la coupe transversale de l'élément à ressort (2), les segments à ressort (3, 4, 5) ont la même largeur.

4. Ressort selon l'une des revendications 1 à 3, **caractérisé en ce que** les segments à ressort extérieurs (3, 5) sont reliés chacun au segment à ressort central (4) par une paire de tronçons (10) bombés vers l'intérieur, en coupe transversale, et en particulier à peu près semi-circulaires, dont l'écartement central (z) représente entre 15 % et 35 % de la largeur en coupe transversale (b) de l'élément à ressort (2).

5. Ressort selon l'une des revendications 1 à 4, **caractérisé en ce que** les boucles à ressort ouvertes (13, 14, 15) sont délimitées, côté extérieur, par des tronçons (6, 7, 16) bombés vers l'intérieur et en particulier à peu près semi-circulaires, étant précisé que les tronçons de segment (23a, 8a ; 23b, 8b ; 12a, 12b ; 25a, 9a ; 25b, 9b) qui font directement suite aux tronçons (6, 7, 16) définissent à chaque fois un angle d'ouverture (β) qui est situé entre 25° et 35°.

6. Ressort selon l'une des revendications 1 ou 5, **caractérisé en ce que** les deux éléments à ressort (2) extérieurs comportent des éléments de raccordement (19, 20) qui s'étendent dans le prolongement des pattes de liaison (18) et qui permettent une liaison par emboîtement et/ou par soudure entre plusieurs ressorts (1) alignés.

7. Ressort selon la revendication 6, **caractérisé en ce que** les éléments de raccordement (20) disposés sur un élément à ressort (2) extérieur sont pourvus de chevilles d'arrêt (20a) tandis que les éléments de raccordement (19) disposés sur l'autre élément à ressort (2) extérieur sont pourvus d'ouvertures (19b) destinées à recevoir les chevilles (20a).

8. Ressort selon l'une des revendications 1 à 7, **caractérisé en ce que** des éléments à ressort de renfort (22) distincts sont placés entre des éléments à ressort (2) voisins.

9. Ressort selon la revendication 8, **caractérisé en ce que** les éléments à ressort de renfort (22) ont une forme qui correspond globalement à celle des éléments à ressort (2), à partir d'une bande de matière plastique profilée.

10. Ressort selon la revendication 8 ou 9, **caractérisé en ce que** les éléments à ressort de renfort (22) comportent des segments à ressort centraux (4') dont les boucles à ressort (15') sont plus courtes que celles des segments à ressort extérieures (3', 4') et qui comportent chacune, côté extérieur, un élément d'enclenchement (28) pour relier de manière amovible les éléments à ressort de renfort (22) aux pattes de liaison (28).

11. Ressort selon l'une des revendications 8 à 10, **caractérisé en ce que** l'épaisseur de matériau et/ou la largeur de matériau des éléments à ressort de renfort (22) sont différentes de celles des éléments à ressort (2).

12. Ressort selon l'une des revendications 1 à 11, **caractérisé en ce que** ses éléments à ressort (2) et/ou ses éléments à ressort de renfort (22) présentent des épaisseurs de matériau et/ou des largeurs de matériau différentes.

13. Ressort selon l'une des revendications 1 à 12, **caractérisé en ce que** les éléments à ressort (2) et les éléments à ressort de renfort (22) se composent de polyoxyméthylène, de polyamide, de polybutylène téréphtalate, de polypropylène, de polyéthérimide, de polyéther sulfone ou de polyétheréthercétone.

14. Ressort selon l'une des revendications 1 à 13, **caractérisé en ce que** le matériau des éléments à ressort (2) et/ou des éléments à ressort de renfort (22) est renforcé avec des matières de charge telles que des fibres de verre, des fibres de carbone, des minéraux et des substances similaires.

15. Matelas en mousse et/ou en latex, qui contient des ressorts (1) conçus selon l'une au moins des revendications 1 à 14.
